# FASCICULE DE BREVET EUROPEEN

(11) **EP 0 571 261 B1**
(45) Date de publication et mention de la délivrance du brevet: **07.10.1998**
(21) Numéro de dépôt: 93401259.2
(22) Date de dépôt: 17.05.1993
(51) Int. Cl.: H04Q 3/66, H04L 12/56, H04L 29/14

(54) **Procédé de gestion décentralisée du routage de communications dans un réseau de commutateurs de paquets**
Verfahren zur dezentralen Steuerung der Kommunikationsleitweglenkung im Paketvermittlungsnetz
Method of decentralized control of communications routing in packet switching network

(30) Priorité: 18.05.1992 FR 9205981
(43) Date de publication de la demande: 24.11.1993
(73) Titulaire: SAT (Société Anonyme de Télécommunications), 75116 Paris (FR)
(72) Inventeur: Delzenne, Michel, 91000 Evry (FR); Huber, Pascale, 94240 L'Hay les Roses (FR)
(74) Mandataire: Arnaud, Jean Pierre Alfred

(56) Documents cités:
- EP-A- 0 352 041
- EP-A- 0 426 356
- WO-A-91/15066
- US-A- 4 736 363
- IEEE COMM. MAGAZINE vol. 22, no. 11, Novembre 1984, US pages 11 - 23 M. GERLA

## Description

La présente invention concerne un procédé de gestion décentralisée du routage des communications dans un réseau maillé de commutateurs de paquets.

Dans un réseau maillé de commutateurs de paquets reliés les uns aux autres par des liaisons "primaires", l'acheminement des données d'un abonné rattaché à ce réseau par une liaison "secondaire" à un autre abonné de ce réseau nécessite la connaissance du "chemin" à emprunter pour établir un circuit de communications. Dans un tel réseau, divers événements peuvent provoquer une modification de la topologie du réseau, et donc des différents chemins reliant les abonnés (coupure d'une liaison, panne d'un commutateur de paquets...).

La gestion du routage dans un réseau maillé nécessite que l'information relative à la topologie du réseau soit à jour à chaque noeud (commutateur de paquets). Il est donc indispensable que des informations relatives au routage soient diffusées.

Plus précisément, un tel réseau maillé dont les commutateurs de paquets sont reliés mutuellement par des liaisons primaires, pose un certain nombre de problèmes. Un premier problème est dû au fait que les liaisons, par lesquelles les informations relatives à des modifications du réseau sont communiquées, sont elles-mêmes sujettes à des pannes. Un autre problème est posé par la prise en compte simultanée de plusieurs modifications qui proviennent de parties différentes du réseau, ou par la prise en compte d'une nouvelle modification lorsque la modification précédente est encore en cours de traitement. Enfin, lorsque le réseau s'est divisé en deux réseaux séparés, par exemple à la suite de pannes, il faut que, dès qu'une nouvelle liaison est réalisée entre les deux réseaux, ceux-ci redeviennent un réseau cohérent.

Dans un procédé qu'on peut envisager pour la diffusion d'informations, chaque commutateur de paquets transmet des informations qu'il possède à ses voisins, jusqu'à ce que cette transmission d'informations ne provoque plus aucune modification. Cependant, ce procédé pose un problème de "convergence", car des informations peuvent être éventuellement relayées indéfiniment dans le réseau ; dans ce cas, les performances du réseau sont gravement dégradées et les informations dont disposent les divers commutateurs de paquets risquent de ne pas être cohérentes.

On peut envisager de résoudre le problème précédent par transmission d'informations relatives au routage des communications uniquement un nombre déterminé de fois, par exemple une seule fois. Cependant, ce procédé ne permet pas la solution des problèmes posés par la division du réseau puis par sa réunification. Ce procédé nécessite donc un perfectionnement permettant la réunion de plusieurs réseaux formés par division, et ce perfectionnement complique considérablement la gestion du réseau.

Une seconde solution au problème précité tire avantage de la structure du réseau qui est formée par des liaisons primaires entre des commutateurs de paquets. Les informations successives relatives aux modifications sont classées par liaison du commutateur de paquets, et les informations successives transmises par une même liaison correspondent à des modifications distinctes. Ce procédé permet la résolution du problème de la réunion automatique de plusieurs réseaux formés par division d'un réseau initial.

Le brevet US-A-4 736 363 décrit un procédé de routage dans lequel des tables de routage sont tenues dans chaque commutateur de paquets. Ce document ne prend pas en compte les modifications de topologie du réseau, mais s'occupe des modifications d'occupation des liaisons. Il ne concerne donc pas le problème considéré selon l'invention.

Le document PCT/WO-A-91/15066 concerne un procédé qui permet un changement de configuration d'un réseau de télécommunications en cas de changement de topologie du réseau. Dans ce procédé, chaque noeud contient une table correspondant à toutes les topologies possibles qui peuvent être obtenues à la suite d'une panne. Le système réalisé est de type préalablement calculé, et il n'assure pas l'adaptation automatique en fonction des changements de topologie.

L'invention concerne un procédé de gestion décentralisée du routage des communications dans un réseau de commutateurs de paquets qui met en oeuvre le procédé de la seconde solution précitée, d'une manière qui résout le problème de convergence, c'est-à-dire qui évite la transmission indéfinie des informations de routage.

Selon l'invention, chaque commutateur de paquets est associé à une collection de tables de routage, comprenant une table affectée à chaque autre commutateur de paquets, et la table comprend un nombre d'éléments correspondant au nombre des liaisons du commutateur de paquets considéré, chaque élément affecté à une liaison contenant une information de routage relative à un chemin possible entre lui-même et l'autre commutateur de paquets. Lors d'une modification, un commutateur de paquets modifie ses tables de routage et transmet au besoin une information de routage représentative des modifications qu'il a apportées et correspondant au meilleur chemin.

Plus précisément, l'invention concerne un procédé de gestion décentralisée du routage de communications dans un réseau de commutateurs de paquets, le réseau étant du type qui comprend des commutateurs de paquets (constituant les noeuds du réseau), des liaisons primaires formées entre deux commutateurs de paquets, et, éventuellement, des liaisons secondaires ne reliant pas deux commutateurs de paquets l'un à l'autre, le nombre total de liaisons de chaque commutateur de paquets étant limité ; selon l'invention, le procédé comprend les étapes suivantes :

la mémorisation, à chaque commutateur de paquets considéré, d'une collection de tables de routage comportant une table affectée à chaque autre commutateur de paquets, cette table affectée à chaque autre commutateur de paquets ayant un nombre d'éléments au moins égal au nombre de liaisons primaires du commutateur de paquets considéré, chaque élément étant affecté à une liaison du commutateur de paquets considéré et contenant au moins une information de routage relative à un chemin possible entre le commutateur de paquets considéré et l'autre commutateur de paquets, puis

à chaque modification de la disponibilité d'une liaison primaire entre deux commutateurs de paquets adjacents,
a) la modification, par chacun des deux commutateurs de paquets adjacents, de ses propres tables de routage concernées par cette modification,
b) la transmission, par chacun de ces deux commutateurs de paquets adjacents et par l'intermédiaire de chacune de ses propres liaisons primaires, d'une information de routage représentative des modifications apportées par ce commutateur de paquets à ses propres tables de routage,
c) la modification éventuelle, par chaque commutateur de paquets qui reçoit cette information de routage représentative des modifications apportées, de ses propres tables de routage, et, dans le cas d'une telle modification,
d) la transmission, par chaque commutateur de paquets concerné ayant modifié ses propres tables de routage et par l'intermédiaire de chacune de ses propres liaisons primaires sauf celle qui le relie au commutateur de paquets qui lui a transmis une information de routage représentative des modifications apportées par ce dernier commutateur de paquets, d'une information de routage représentative des modifications apportées par ce commutateur de paquets concerné à ses propres tables de routage, et
e) la répétition des étapes c) et d) dans les commutateurs de paquets concernés tant qu'une information de routage provoque une modification de table de routage dans un commutateur de paquets quelconque.

Habituellement, la modification de la disponibilité d'une liaison primaire entre deux commutateurs de paquets adjacents est soit la création d'une liaison primaire entre deux commutateurs de paquets du réseau, soit la suppression d'une telle liaison primaire existante, soit la création d'une liaison primaire entre un commutateur de paquets du réseau et un nouveau commutateur de paquets non encore connecté au réseau, soit la suppression de la dernière liaison primaire reliant un commutateur de paquets au réseau.

De préférence, lorsque l'information de routage relative à un chemin possible qu'un commutateur de paquets concerné doit transmettre à un commutateur de paquets voisin est représentative d'un chemin contenant déjà ce commutateur de paquets voisin, le commutateur de paquets concerné la remplace soit par une information de routage représentative d'un chemin ne contenant pas ce commutateur de paquets voisin, soit, à défaut, par une information d'inaccessibilité.

De préférence, l'information de routage relative à un chemin possible est relative au plus court chemin possible entre les deux commutateurs de paquets, c'est-à-dire le chemin comprenant le plus petit nombre de commutateurs de paquets.

Dans une variante, chaque élément de table de routage contient plusieurs informations de routage représentatives de plusieurs chemins possibles.

Il est avantageux que chaque table de routage contienne un nombre d'éléments égal au nombre total de liaisons du commutateur de paquets concerné, et que les éléments correspondant à des liaisons inutilisables par le réseau contiennent une information d'inaccessibilité.

L'information de routage relative à un chemin particulier comporte de préférence une information relative au nombre de commutateurs de paquets contenus dans le chemin et la liste des commutateurs de paquets par lesquels passe successivement le chemin.

Il est avantageux que le procédé comprenne aussi les étapes suivantes, mises en oeuvre dans chaque commutateur de paquets :
a) le comptage du temps écoulé depuis la dernière modification apportée à ses propres tables de routage, et, lorsque ce temps écoulé atteint une période prédéterminée :
b) la transmission, par l'intermédiaire de chacune de ses propres liaisons primaires, d'une information de routage représentative de ses propres tables de routage,
c) la modification éventuelle, par chaque commutateur de paquets qui reçoit cette information de routage, de ses propres tables de routage, et, dans le cas d'une telle modification,
d) la transmission, par chaque commutateur de paquets concerné ayant modifié ses propres tables de routage et par l'intermédiaire de chacune de ses propres liaisons primaires sauf celle qui le relie au commutateur de paquets qui lui a transmis une information de routage, d'une information de routage représentative des modifications apportées par ce commutateur de paquets concerné à ses propres tables de routage, et
e) la répétition des étapes c) et d) dans les commutateurs de paquets concernés tant qu'une information de routage provoque une modification de table de routage dans un commutateur de paquets quelconque.

De préférence, toute transmission d'information de routage d'un commutateur de paquets à un autre est réalisée suivant un protocole assurant l'intégrité des informations transmises.

Selon l'invention, le bouclage d'une information, c'est-à-dire son passage deux fois par un même commutateur de paquets, est strictement évité. Ce bouclage peut être évité soit par un traitement réalisé par le commutateur de paquets émetteur avant émission de l'information (il dispose alors de préférence de données suffisantes pour pouvoir remplacer ce chemin de bouclage par un autre, sans être obligé d'introduire systématiquement des données d'inaccessibilité), soit par le commutateur de paquets récepteur lorsqu'il reçoit l'information (il vérifie alors si le chemin reçu est un chemin de bouclage ; dans l'affirmative, le chemin reçu est remplacé par une information d'inaccessibilité).

On considère maintenant plus en détail un mode de réalisation particulier de l'invention, concernant un réseau destiné à contenir au maximum deux cent cinquante-six commutateurs de paquets, chacun disposant au maximum de huit liaisons.

Chaque commutateur de paquets dispose, en mémoire vive, d'une collection de tables de routage, à raison d'une table de routage par commutateur de paquets autre que le commutateur concerné. Chaque table affectée à un commutateur de paquets a un nombre d'éléments égal au nombre de liaisons du commutateur de paquets, c'est-à-dire huit dans le cas considéré. Chaque élément comprend donc des informations de routage qui comprennent successivement, dans un cas simple, le numéro de la liaison concernée, le nombre de commutateurs de paquets par lesquels passe le plus court chemin possible vers le commutateur de paquets concerné à partir de cette liaison, et l'identité successive des commutateurs de paquets contenus dans ce chemin. Lorsqu'une liaison n'est pas reliée à un autre commutateur de paquets, l'élément correspondant comporte une information d'inaccessibilité.

Cette disposition est celle de l'état de régime permanent, lorsque la topologie du réseau est immuable. Cependant, cette topologie peut être modifiée par une modification du maillage du réseau ou par l'ajout ou le retrait d'un commutateur de paquets.

On va considérer les opérations exécutées dans le cas des divers événements concernant cette topologie.

On suppose d'abord que l'événement à prendre en compte est la rupture d'une liaison entre deux commutateurs de paquets adjacents. Dans ce cas, chacun de ces deux commutateurs de paquets modifie ses tables de routage concernées par cette modification, c'est-à-dire remplace les éléments des tables de routage des commutateurs de paquets par une information d'inaccessibilité. Lorsque chacun des deux commutateurs de paquets adjacents a terminé la modification de ses tables, il transmet, par chacune de ses propres liaisons primaires actives, une information de routage représentative des modifications qu'il a apportées à ses propres tables de routage. Les commutateurs de paquets qui reçoivent cette information modifient éventuellement leurs tables de routage d'après cette information de routage. Si un commutateur de paquets a été amené à effectuer des modifications dans ses tables de routage, il transmet des informations correspondantes de routage à tous les commutateurs de paquets voisins. Si au contraire il n'a effectué aucune modification de ses tables de routage, il ne transmet aucune information, assurant ainsi la convergence du processus de remise à jour.

Dans le cas où la modification de la topologie est l'établissement d'une liaison entre deux commutateurs de paquets, les deux commutateurs de paquets adjacents commencent par remettre à jour leurs propres tables de routage, c'est-à-dire par remplacer l'élément d'information indiquant l'état inaccessible de la liaison par un élément d'information de routage comprenant un trajet commençant par le commutateur de paquets adjacent. Ensuite, ils transmettent la nouvelle information de routage à leurs voisins, comme indiqué précédemment.

Enfin, on considère le cas de l'addition d'un nouveau commutateur de paquets au réseau. Dans ce cas, cette addition s'effectue par établissement d'une nouvelle liaison primaire entre un commutateur de paquets déjà présent dans le réseau et un nouveau commutateur de paquets. Le commutateur de paquets déjà relié au réseau transmet alors des informations de routage à ses voisins et finalement tous les commutateurs de paquets remettent à jour leurs tables, un certain nombre d'éléments de la table correspondant au nouveau commutateur de paquets contiennent une information de routage relative à un chemin possible. Dans ce cas, la convergence est obtenue lorsque tous les commutateurs de paquets ont réalisé au moins une modification de leur collection de tables.

On a indiqué précédemment qu'il était important d'éviter le "bouclage" d'un chemin, c'est à dire l'utilisation d'un chemin passant deux fois par un même commutateur de paquets. Il est manifeste qu'un tel chemin bouclé ne peut pas constituer le plus court chemin possible puisque le chemin contenant la boucle est forcément plus long qu'un chemin identique, à l'exception de la suppression de la boucle. En conséquence, le procédé de l'invention élimine toute possibilité de bouclage.

En pratique, dans un réseau maillé du type concerné, chaque "liaison primaire" est constituée par un support physique, par exemple une fibre optique, qui permet le passage simultané de plusieurs communications, c'est-à-dire comporte plusieurs "canaux" de communications. Par exemple, une telle fibre optique permet la formation de cent vingt-huit canaux parallèles. Dans ce cas, il est souhaitable que le fonctionnement simple décrit précédemment soit pondéré par des informations d'occupation. Par exemple, un taux d'occupation, tel qu'un nombre ou une fraction de canaux utilisés, peut être mémorisé pour chaque liaison primaire de chaque commutateur de paquets. Dans ce cas, le traitement réalisé dans les commutateurs de paquets tient compte de la charge d'une liaison primaire et peut éventuellement remplacer le plus court chemin par un chemin plus long lorsque le plus court chemin passe par une liaison très chargée. Une telle caractéristique peut être facilement gérée au niveau de chaque commutateur de paquets, par addition, à la collection de tables de routage, d'une table contenant les taux d'occupation des liaisons primaires du commutateur de paquets concerné. Dans ce cas, la gestion du routage des communications peut être modifiée même si la topologie physique du réseau n'est pas modifiée, dans le cas où des liaisons primaires se saturent.

Il peut arriver que la topologie du réseau ne soit pas modifiée pendant une longue période. Il pourrait donc arriver que des éléments des tables de routage de certains commutateurs de paquets soient modifiées à la suite de défauts propres aux commutateurs de paquets ou au support physique de la collection de tables, sans que les modifications correspondent à des véritables modifications du réseau. Il est donc souhaitable que, périodiquement, les tables de routage soient vérifiées et éventuellement corrigées. Dans ce cas, chaque commutateur de paquets compte le temps écoulé depuis la dernière modification apportée à ses propres tables de routage et, lorsque ce temps atteint une période prédéterminée, il déclenche des opérations analogues à celles qui sont utilisées à la suite d'une modification de la topologie. Plus précisément, il transmet alors à chacun de ses voisins une information de routage représentative de ses propres tables de routage. Les commutateurs voisins modifient éventuellement leurs propres tables de routage. Si aucun des commutateurs voisins ne modifie ses tables de routage, le processus est interrompu. Par contre, ce processus est redéclenché lorsque chacun des commutateurs voisins du commutateur émetteur atteint lui-même la fin de sa période prédéterminée ; il transmet alors l'état de ses tables à ses voisins. De cette manière, toutes les tables de routage qui ont pu être sujettes à erreur sont corrigées.

Enfin, il est important, pour la convergence du processus de gestion, que les informations de routage transmises ne soient pas affectées par des erreurs qui pourraient nécessiter des modifications successives inopportunes. A cet effet, il est souhaitable que toutes les informations de routage transmises d'un commutateur à un autre mettent en oeuvre un protocole assurant l'intégrité des informations transmises. De tels protocoles sont bien connus des hommes du métier, et ils comprennent en général l'addition d'informations de vérifications diverses bien connues des hommes du métier.

On considère maintenant quelques variantes des procédés et appareils du mode de réalisation particulier qu'on vient de décrire.

Le bouclage peut être évité de différentes manières. Dans le mode de réalisation précédent, lorsque des informations de routage doivent être transmises à un commutateur de paquets adjacent, le commutateur de paquets émetteur vérifie d'abord que les chemins transmis ne comprennent pas déjà le commutateur de paquets voisin. Si les trajets à transmettre contiennent déjà ce commutateur voisin, le commutateur émetteur transmet un autre chemin qui n'est plus le plus court chemin possible mais qui ne contient pas ce commutateur voisin et évite donc le bouclage.

Dans une variante, il est possible d'utiliser un traitement au niveau du commutateur de paquets récepteur. Dans ce cas, il est avantageux que les informations de routage transmises ne contiennent pas un seul chemin, qui est en général le plus court chemin possible, mais aussi des informations relatives à plusieurs chemins possibles. L'appareil récepteur peut alors lui-même effectuer un traitement visant à déterminer l'éventualité d'un bouclage.

Dans une autre variante, le traitement destiné à éviter le bouclage peut être réparti entre les commutateurs de paquets. Dans un mode de réalisation, l'appareil émetteur effectue le traitement décrit précédemment, mais transmet plusieurs trajets possibles, dans un ordre préférentiel par exemple. Ensuite, l'appareil émetteur effectue éventuellement des modifications en fonction de la qualité des liaisons (par exemple, d'après le nombre de canaux disponibles au moment considéré).

Bien entendu, les tables de routage peuvent éventuellement contenir des éléments supplémentaires d'informations relatives soit à la nature ou à la structure du réseau et de ses éléments constituants (nature du support des liaisons, propriétés et restrictions des commutateurs de paquets), soit à des contraintes diverses fixées par des considérations techniques ou réglementaires.

L'invention concerne aussi des appareils destinés à la mise en oeuvre du procédé selon l'invention, ayant une architecture particulière de mémoire comprenant un niveau de collection de tables, un niveau de table de routage, et un niveau d'élément d'information.

## Revendications

1. Procédé de gestion décentralisée du routage de communications dans un réseau de commutateurs de paquets, le réseau étant du type qui comprend
des commutateurs de paquets,
des liaisons primaires formées entre deux desdits commutateurs de paquets, et, éventuellement,
des liaisons secondaires ne reliant pas deux commutateurs de paquets l'un à l'autre,
le nombre total de liaisons de chaque commutateur de paquets étant limité,
caractérisé en ce qu'il comprend les étapes suivantes :
la mémorisation, à chaque commutateur de paquets considéré, d'une collection de tables de routage comportant une table affectée à chaque autre commutateur de paquets, cette table affectée à chaque autre commutateur de paquets ayant un nombre d'éléments au moins égal au nombre de liaisons primaires du commutateur de paquets considéré, chaque élément étant affecté à une liaison du commutateur de paquets considéré et contenant au moins une information de routage relative à un chemin possible entre le commutateur de paquets considéré et l'autre commutateur de paquets, puis
à chaque modification de la disponibilité d'une liaison primaire entre deux commutateurs de paquets adjacents,
a) la modification, par chacun des deux commutateurs de paquets adjacents, de ses propres tables de routage concernées par cette modification,
b) la transmission, par chacun de ces deux commutateurs de paquets adjacents et par l'intermédiaire de chacune de ses propres liaisons primaires, d'une information de routage représentative des modifications apportées par ce commutateur de paquets à ses propres tables de routage,
c) la modification éventuelle, par chaque commutateur de paquets qui reçoit cette information de routage représentative des modifications apportées, de ses propres tables de routage, et, dans le cas d'une telle modification,
d) la transmission, par chaque commutateur de paquets concerné ayant modifié ses propres tables de routage et par l'intermédiaire de chacune de ses propres liaisons primaires sauf celle qui le relie au commutateur de paquets qui lui a transmis une information de routage représentative des modifications apportées par ce dernier commutateur de paquets, d'une information de routage représentative des modifications apportées par ce commutateur de paquets concerné à ses propres tables de routage, et
e) la répétition des étapes c) et d) dans les commutateurs de paquets concernés tant qu'une information de routage provoque une modification de table de routage dans un commutateur de paquets quelconque.

2. Procédé selon la revendication 1, caractérisé en ce que la modification de la disponibilité d'une liaison primaire entre deux commutateurs de paquets adjacents est soit la création d'une liaison primaire entre deux commutateurs de paquets du réseau, soit la suppression d'une telle liaison primaire existante, soit la création d'une liaison primaire entre un commutateur de paquets du réseau et un nouveau commutateur de paquets non encore connecté au réseau, soit la suppression de la dernière liaison primaire reliant un commutateur de paquets au réseau.

3. Procédé selon l'une des revendications 1 et 2, caractérisé en ce que lorsque l'information de routage relative à un chemin possible qu'un commutateur de paquets concerné doit transmettre à un commutateur de paquets voisin est représentative d'un chemin contenant déjà ce commutateur de paquets voisin, le commutateur de paquets concerné la remplace soit par une information de routage représentative d'un chemin ne contenant pas ce commutateur de paquets voisin, soit, à défaut, par une information d'inaccessibilité.

4. Procédé selon l'une quelconque des revendications précédentes, caractérisé en ce que l'information de routage relative à un chemin possible est relative au plus court chemin possible entre les deux commutateurs de paquets, c'est-à-dire le chemin comprenant le plus petit nombre de commutateurs de paquets.

5. Procédé selon l'une quelconque des revendications précédentes, caractérisé en ce que chaque élément de table de routage ne contient qu'un seul chemin possible.

6. Procédé selon l'une quelconque des revendications précédentes, caractérisé en ce que chaque table de routage contient un nombre d'éléments égal au nombre total de liaisons du commutateur de paquets concerné, et les éléments correspondant à des liaisons inutilisables par le réseau contiennent une information d'inaccessibilité du commutateur de paquets concerné.

7. Procédé selon l'une quelconque des revendications précédentes, caractérisé en ce que l'information de routage relative à un chemin particulier comporte une information relative au nombre de commutateurs de paquets contenus dans le chemin et la liste des commutateurs de paquets par lesquels passe successivement le chemin.

8. Procédé selon l'une quelconque des revendications précédentes, caractérisé en ce que il comprend aussi les étapes suivantes :
a) le comptage, par le commutateur de paquets, du temps écoulé depuis la dernière modification apportée à ses propres tables de routage, et, lorsque ce temps écoulé atteint une période prédéterminée :
b) la transmission, par l'intermédiaire de chacune de ses propres liaisons primaires, d'une information de routage représentative de ses propres tables de routage,
c) la modification éventuelle, par chaque commutateur de paquets qui reçoit cette information de routage, de ses propres tables de routage, et, dans le cas d'une telle modification,
d) la transmission, par chaque commutateur de paquets concerné ayant modifié ses propres tables de routage et par l'intermédiaire de chacune de ses propres liaisons primaires sauf celle qui le relie au commutateur de paquets qui lui a transmis une information de routage, d'une information de routage représentative des modifications apportées par ce commutateur de paquets concerné à ses propres tables de routage, et
e) la répétition des étapes c) et d) dans les commutateurs de paquets concernés tant qu'une information de routage provoque une modification de table de routage dans un commutateur de paquets quelconque.

9. Procédé selon l'une quelconque des revendications précédentes, caractérisé en ce que toute transmission d'information de routage d'un commutateur de paquets à un autre est réalisée suivant un protocole assurant l'intégrité des informations transmises.

## Claims

1. A decentralized method of managing call routing in a network of packet switches, the network being of the type including :
packet switches,
primary links formed between pairs of said switches, and optionally
secondary links that do not interconnect two packet switches,
the total number of links for each packet switch being limited,
the method being characterized in that it includes the following steps :
in each packet switch under consideration, storing a collection of routing tables including one table allocated to each other packet switch, said table allocated to each other packet switch having a number of elements not less than the number of primary links of the packet switch in question, each element being allocated to a link of the packet switch in question and containing at least one item of routing information relating to a possible path between the packet switch in question and the other packet switch, then
on each occasion that the availability of a primary link between two adjacent packet switches is modified :
a) each of the two adjacent packet switches modifies its own routing tables concerned by the modification,
b) each of the two adjacent packet switches transmits over each of its own primary links routing information representing the modifications made by the packet switch to its own routing tables,
c) each packet switch receiving this routing information representative of the modifications made, optionally modifies its own routing tables, and in the event of it making such a modification,
d) each packet switch in question that has modified its own routing tables, transmits routing information via each of its own primary links other than the link connecting it to the packet switch which transmitted thereto routing information representative of modifications made by said packet switch, which routing information is representative of modifications made by the packet switch in question to its own routing tables, and
e) steps c) and d) are repeated in the packet switches concerned so long as an item of routing information causes a modification to be made in the routing table of any packet switch.

2. A method according to claim 1, characterized in that a modification to the availability of a primary link between two adjacent packet switches is either the creation of a primary link between two packet switches of the network, or the removal of such an existing primary link, or the creation of a primary link between a packet switch of the network and a new packet switch not yet connected to the network, or the removal of the last primary link connecting a packet switch to the network.

3. A method according to claim 1 or 2, characterized in that when the item of routing information relating to a possible path that a packet switch in question must transmit to an adjacent packet switch is representative of a path already containing said adjacent packet switch, the packet switch in question replaces the item either by an item of routing information representative of a path not containing said adjacent packet switch or, by default, by information denoting inaccessibility.

4. A method according to any preceding claim, characterized in that the item of routing information relating to a possible path relates to the shortest path possible between the two packet switches, i.e. the path having the smallest number of packet switches.

5. A method according to any preceding claim, characterized in that each element of the routing table contains only one possible path.

6. A method according to any preceding claim, characterized in that each routing table contains a number of elements equal to the total number of links of the packet switch in question, and the elements corresponding to links that are unusable by the network contain information denoting inaccessibility of the packet switch in question.

7. A method according to any preceding claim, characterized in that the item of routing information relating to a particular path includes information relating to the number of packet switches contained in the path and the list of packet switches via which the path passes in succession.

8. A method according to any preceding claim, characterized in that it also includes the following steps :
a) the packet switch measures the time that has elapsed since the last modification made to its own routing tables, and when said elapsed time reaches a predetermined period :
b) it transmits via each of its own primary links routing information representative of its own routing tables,
c) each packet switch that receives said routing information optionally modifies its own routing tables, and in the event of making such a modification :
d) each packet switch in question that has modified its own routing tables transmits routing information via each of its own primary links other than the primary link connecting it to the packet switch which transmitted routing information thereto, which routing information is representative of the modifications made by said packet switch in question to its own routing tables, and
e) steps c) and d) are repeated in the packet switches concerned so long as an item of routing information causes a routing table to be modified in any packet switch.

9. A method according to any preceding claim, characterized in that all transmission of routing information from one packet switch to another is implemented using a protocol that guarantees the integrity of the information transmitted.

## Patentansprüche

1. Verfahren zur dezentralen Steuerung der Kommunikationsleitweglenkung in einem Paketvermittlungsnetz, wobei das Netz folgende Bestandteile umfaßt:
- Paketvermittlungsstellen,
- Primärverbindungen zwischen jeweils zwei dieser Paketvermittlungsstellen sowie eventuell
- Sekundärverbindungen, die keine zwei Paketvermittlungsstellen miteinander verbinden,
- wobei die Gesamtzahl der Verbindungen jeder Paketvermittlungsstelle begrenzt ist,
dadurch gekennzeichnet, daß das Verfahren die folgenden Verfahrensschritte umfaßt:
- Speicherung einer Sammlung von Leitweglenkungstafeln an jeder Paketvermittlungsstelle, wobei eine Tafel jeder anderen Paketvermittlungsstelle zugeordnet ist, wobei diese jeder anderen Paketvermittlungsstelle zugeordnete Tafel eine Anzahl von Elementen umfaßt, welche wenigstens der Anzahl der Primärverbindungen der betreffenden Paketvermittlungsstelle entspricht, jedes Element einer Verbindung der betreffenden Paketvermittlungsstelle zugeordnet ist und wenigstens eine Leitweglenkungsinformation bezüglich eines möglichen Leitweges zwischen der betreffenden Paketvermittlungsstelle und der anderen Paketvermittlungsstelle beinhaltet, dann
- bei jeder Verfügbarkeitsänderung einer Primärverbindung zwischen zwei benachbarten Paketvermittlungsstellen -
a) Änderung der eigenen von dieser Änderung betroffenen Leitweglenkungstafeln durch jede der beiden benachbarten Paketvermittlungsstellen,
b) Übertragung - durch jede dieser beiden benachbarten Paketvermittlungsstellen und mittels jeder ihrer Primärverbindungen - einer Leitweglenkungsinformation, die den durch diese Paketvermittlungsstelle an ihren Leitweglenkungstafeln vorgenommenen Änderungen entspricht,
c) mögliche Veränderung - durch jede Paketvermittlungsstelle, die diese den vorgenommenen Änderungen entsprechende Leitweglenkungsinformation erhält - der eigenen Leitweglenkungstafeln, und im Falle einer solchen Änderung
d) Übertragung einer Leitweglenkungsinformation, die den von diesen betroffenen Paketvermittlungsstellen vorgenommenen und ihre eigenen Leitweglenkungstafeln betreffenden Änderungen entspricht, wobei die Übertragung durch jede betroffene Paketvermittlungsstelle erfolgt, bei der sich die eigenen Leitweglenkungstafeln geändert haben und ferner durch Zwischenschaltung jeder ihrer eigenen Primärverbindungen mit Ausnahme derjenigen, die sie mit der Paketvermittlungsstelle verbindet, die ihr eine den durch die letztgenannte Paketvermittlungsstelle vorgenommenen Änderungen entsprechende Leitweglenkungsinformation übertragen hat und
e) Wiederholung der Verfahrensschritte c) und d) bei den betreffenden Paketvermittlungsstellen, solange eine Leitweglenkungsinformation eine Änderung der Leitweglenkungstafeln in irgendeiner Paketvermittlungsstelle verursacht.

2. Verfahren nach Anspruch 1, dadurch gekennzeichnet, daß die Verfügbarkeitsänderung einer Primärverbindung zwischen zwei benachbarten Paketvermittlungsstellen in der Herstellung einer Primärverbindung zwischen zwei zum Netz gehörenden Paketvermittlungsstellen, in der Unterbrechung einer solchen bereits existierenden Primärverbindung, in der Herstellung einer Primärverbindung zwischen einer zum Netz gehörenden Paketvermittlungsstelle und einer neu hinzugekommenen, bisher noch nicht mit dem Netz verbundenen Paketvermittlungsstelle oder in der Unterbrechung einer solchen letztgenannten Primärverbindung zwischen einer Paketvermittlungsstelle und dem Netz besteht.

3. Verfahren nach einem der Ansprüche 1 und 2, dadurch gekennzeichnet, daß, wenn die von einer betreffenden Paketvermittlungsstelle an eine benachbarte Paketvermittlungsstelle zu übertragende Leitweglenkungsinformation über einen möglichen Leitweg einen bereits die benachbarte Paketvermittlungsstelle einschließenden Leitweg betrifft, die betreffende Paketvermittlungsstelle diese Leitweglenkungsinformation durch eine Leitweglenkungsinformation, welche einen die benachbarte Paketvermittlungsstelle nicht einschließenden Leitweg betrifft, oder, falls möglich, durch eine Unzugänglichkeitsinformation ersetzt.

4. Verfahren nach einem der vorhergehenden Ansprüche, dadurch gekennzeichnet, daß die einen möglichen Leitweg betreffende Leitweglenkungsinformation sich auf den kürzest möglichen Leitweg zwischen den beiden Paketvermittlungsstellen bezieht, d. h. den Leitweg, der die kleinste Anzahl an Paketvermittlungsstellen umfaßt.

5. Verfahren nach einem der vorhergehenden Ansprüche, dadurch gekennzeichnet, daß jedes Element der Leitweglenkungstafel nur einen möglichen Leitweg enthält.

6. Verfahren nach einem der vorhergehenden Ansprüche, dadurch gekennzeichnet, daß jede Leitweglenkungstafel eine Anzahl von Elementen enthält, die der Gesamtanzahl der Verbindungen der betreffenden Paketvermittlungsstelle entspricht, und die Elemente, welche dem Netz nicht zur Verfügung stehenden Verbindungen entsprechen, eine Unzugänglichkeitsinformation der betreffenden Paketvermittlungsstelle enthalten.

7. Verfahren nach einem der vorhergehenden Ansprüche, dadurch gekennzeichnet, daß die einen bestimmten Leitweg betreffende Leitweglenkungsinformation eine Information über die Zahl der im Leitweg enthaltenen Paketvermittlungsstellen sowie die Liste der nacheinander auf dem Leitweg liegenden Paketvermittlungsstellen umfaßt.

8. Verfahren nach einem der vorhergehenden Ansprüche, dadurch gekennzeichnet, daß das Verfahren zusätzlich die folgenden Verfahrensschritte beinhaltet:
a) Ermitteln der bei einer Paketvermittlungsstelle nach der letzten Änderung ihrer Leitweglenkungstafeln verstrichenen Zeit durch die Paketvermittlungsstelle und, sobald diese verstrichene Zeit einer vorbestimmten Zeit entspricht:
b) übertragen der den jeweiligen Leitweglenkungstafeln dieser Paketvermittlungsstelle entsprechenden Leitweglenkungsinformation mittels jeder ihrer Primärverbindungen,
c) eventuelle Änderung der eigenen Leitweglenkungstafeln durch jede Paketvermittlungsstelle, die diese Leitweglenkungsinformation empfängt, und - im Falle einer solchen Änderung -,
d) Übertragung einer Leitweglenkungsinformation, die den von diesen betroffenen Paketvermittlungsstellen vorgenommenen und ihre eigenen Leitweglenkungstafeln betreffenden Änderungen entspricht, wobei die Übertragung durch jede betroffene Paketvermittlungsstelle erfolgt, bei der sich die eigenen Leitweglenkungstafeln geändert haben und ferner durch Zwischenschaltung jeder ihrer eigenen Primärverbindungen mit Ausnahme derjenigen, die sie mit der Paketvermittlungsstelle verbindet, die ihr eine den durch die letztgenannte Paketvermittlungsstelle vorgenommenen Änderungen entsprechende Leitweglenkungsinformation übertragen hat und
e) Wiederholung der Verfahrensschritte c) und d) bei den betreffenden Paketvermittlungsstellen, solange eine Leitweglenkungsinformation eine Änderung der Leitweglenkungstafeln in irgendeiner Paketvermittlungsstelle verursacht.

9. Verfahren nach einem der vorangegangenen Ansprüche, dadurch gekennzeichnet, daß die gesamte Übertragung der Leitweglenkungsinformationen einer Paketvermittlungsstelle an eine andere Paketvermittlungsstelle entsprechend einem Protokoll durchgeführt wird, das die Vollständigkeit der übertragenen Informationen garantiert.
